# EUROPEAN PATENT SPECIFICATION

(11) **EP 0 560 459 B1**
(45) Date of publication and mention of the grant of the patent: **30.12.1998**
(21) Application number: 93200717.2
(22) Date of filing: 11.03.1993
(51) Int. Cl.: G01V 8/10, G01V 8/16

(54) **Device for detecting the position of a movable body**
Anordnung zur Feststellung der Lage eines beweglichen Körpers
Dispositif pour la détermination de la position d'une organe mobile

(30) Priority: 11.03.1992 NL 9200449
(43) Date of publication of application: 15.09.1993
(73) Proprietor: N.V. Nederlandsche Apparatenfabriek NEDAP, NL-7141 DE Groenlo (NL)
(72) Inventor: Steentjes,Hendrikus Bernardus Maria, NL-7011 VJ Gaanderen (NL)
(74) Representative: Smulders, Theodorus A.H.J., Ir.

(56) References cited:
- EP-A- 0 072 386
- EP-A- 0 230 517
- EP-A- 0 283 760
- EP-A- 0 443 216
- DE-A- 3 716 389
- FR-A- 2 442 457
- US-A- 4 893 120
- PATENT ABSTRACTS OF JAPAN vol. 6, no. 59 (P-110)16 April 1982 & JP-A-57 000 573 (MATSUSHITA ELECTRIC IND CO) 5 January 1982

## Description

The invention relates to a device for detecting the position of a movable body, comprising an element which is part of the body or is coupled to the body and moving with it, provided with at least one opening extending between opposite sides of the element and which moves along a predetermined path during movement of the body, and at least one light-radiating transmitter and at least one light-sensitive receiver mounted on the same side of a carrier, communicating with each other in particular positions of the element via a light path extending through the at least one opening. Such a device is disclosed in EP-A-0283760. In the known device the light radiated by the transmitter travels through the opening and is reflected back by means of a mirror so that the light travels back through the same opening to be subsequently received by the receiver.

A disadvantage of the known device is that the use of a mirror causes a loss of light strenght after reflection by the mirror. Furthermore, the transmitter and the receiver have to be positioned relatively close to each other, whereby the light transmitted by the transmitter and received by the receiver travels in two opposite directions through the same opening. This also means that the opening and the element have to be relatively large. The object of the invention is to provide a device of the type described above which does not suffer from the above referred to drawbacks.

According to the invention, a device of the above described type is characterised in that the lightpath extends in only one direction through the at least one opening and the light path extends through at least one light guide having two ends, said light guide being fixed relative to the carrier, wherein said light guide extends outside the element from the path of the opening to the at least one transmitter or receiver and forms a curved path and wherein one end of the light guide faces the transmitter or the receiver and wherein the other end of the light guide and the carrier are arranged on opposite sides of the element, respectively.

The use of a light guide minimizes the loss of light. Furthermore, due to the use of a light guide and the fact that the light path extends in only one direction through the at least one opening the transmitter and receiver do not have to be positioned relatively close to each other and the at least one opening does not have to be relatively large.

It is noted that Patent Abstracts of Japan, JP-A-57-573 discloses a device wherein a light beam transmitted by a transmitter is deflected towards a receiver by means of a light guide. However, in this known device the light guide is integrated in the element so that the element becomes relatively large. In fact the element is a door or a window. It is not known from JP-A-57-573 to fix the light guide relative to the carrier and to arrange the carrier and the lightguide on opposite sides of the element as required by the present invention.

Furthermore, EP-A- 0 443 216 discloses a device for detecting the position of movable body. This known device comprises a sliding roof for a car and elements coupled thereto, moving with the sliding roof. In the elements coupled to the sliding roof, openings are provided. Via the openings, in particular positions of the sliding roof, light rays emitted by a transmitter arranged on one side of the elements can be received by a sensor located on the other side of the elements.

A drawback of such devices is that the transmitter and the receiver must be located opposite each other.

To this end, each transmitter and receiver requires a separate mounting operation and mounting place. Also, separate electric connections and separate printed circuit boards are required for the transmitter and the receiver. It is not known from EP-A- 443216 to mount the transmitter and the receiver on the same side of the carrier as required by the present invention.

The invention will be further illustrated hereinafter with reference to the accompanying drawings.
Fig. 1 and fig. 2 schematically illustrate the operation of two known devices;
fig. 3 schematically shows a perspective view of an example of a detection device according to the invention;
Fig. 4 shows a part of a variant of a device according to the invention; and
Fig. 5 shows a variant of a device according to the invention wherein the part shown in Fig. 4 is included.

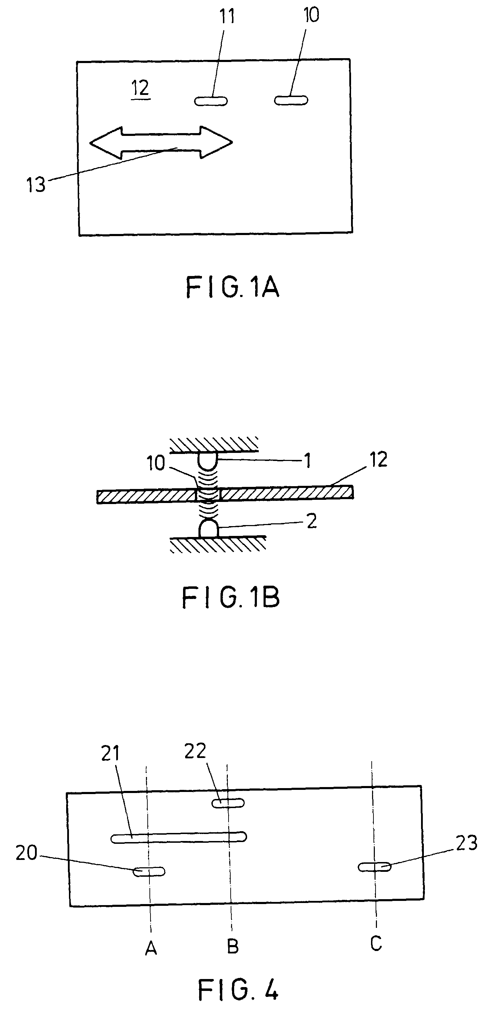

Fig. 1A shows a movable body 12, comprising one or more openings 10, 11. As will be further explained, the position of the body and/or of a second body or assembly or element connected to the body 12 along a predetermined path can be determined by means of the openings. In the example shown, body 12 is plate-shaped and the body is capable of moving along a predetermined path in the direction indicated by an arrow 13.

Fig. 1B shows a portion of a body 12 in cross section at opening 10. Arranged on opposite sides of the body, along the path of openings 10, 11, are a transmitter 1, radiating light during operation, and a light-sensitive receiver 2. The light need not be visible; in principle, infrared or ultraviolet light can also be used. Transmitter 1 can, for instance, be a light-emitting diode (LED) and the light-sensitive receiver can, for instance, be a phototransistor. As long as body 12 is located between the transmitter and the receiver, the receiver does not receive any light originating from the transmitter. However, as soon as an opening of body 12 is located between the transmitter and the receiver, the receiver receives the light emitted by the transmitter. Subsequently, the transmitter provides a corresponding output signal, which may serve to energize a control device of the sliding roof and/or a reproducing device.

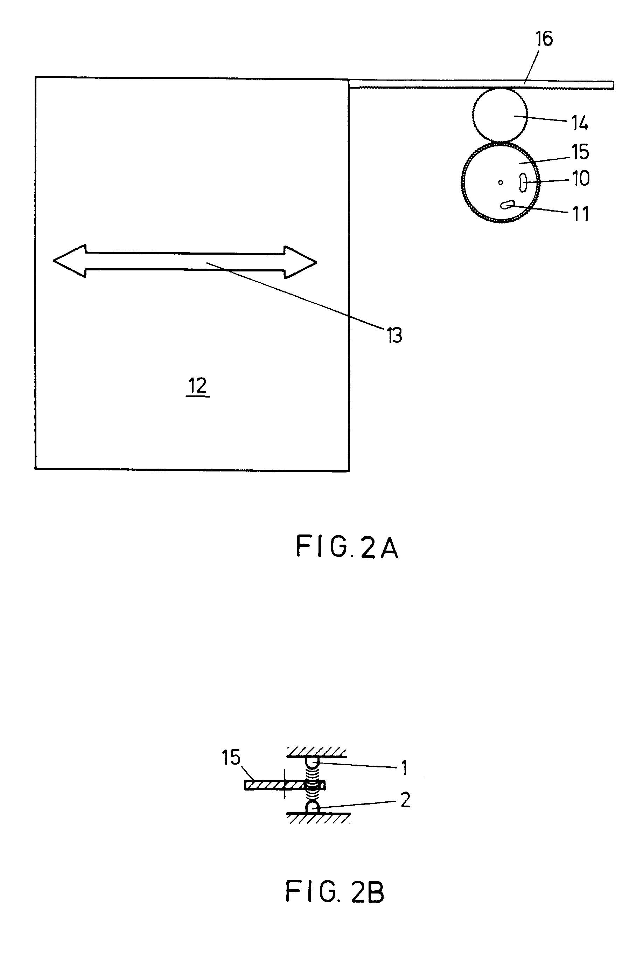

Fig. 2A shows a variant, body 12 being coupled to a toothed wheel assembly 14, 15. In this example, the coupling comprises a toothed rack 16. Provided in toothed wheel 15 are openings 10, 11 again. Fig. 2B again shows transmitter 1 and receiver 2, mounted on opposite sides of toothed wheel 15 along the path of openings 10, 11. The transmitter and the receiver are capable of communicating with each other as soon as an opening 10, 11 is located precisely between the transmitter and the receiver and in line with the transmitter and the receiver. Because the location of the openings is known, the position of toothed wheel 15 and hence the position of the sliding roof, fixedly coupled thereto, are also known, as soon as the receiver receives light from the transmitter. The output signal of the receiver may again serve to control a driving device of the sliding roof.

As has already been observed, the necessity of mounting a transmitter and a receiver opposite each other on opposite sides of a moving element may sometimes be troublesome.

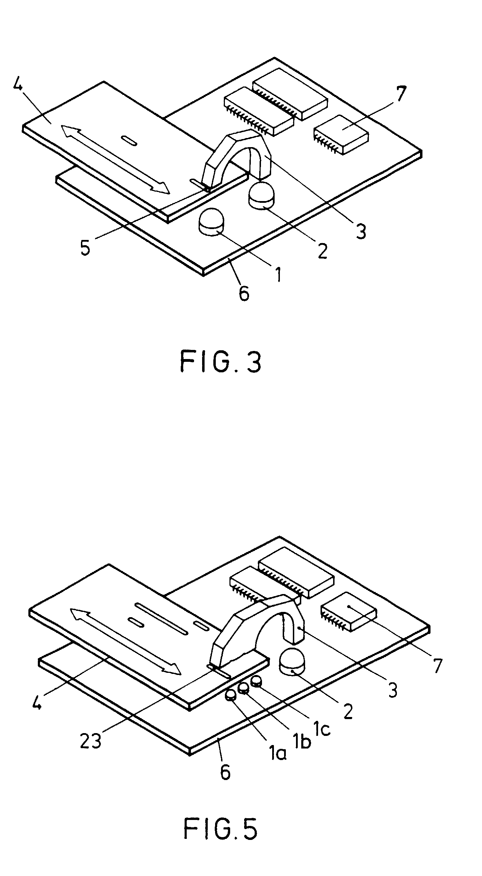

According to the invention, this drawback can be overcome by using a configuration of the type shown, by way of example, in Fig. 3.

It is observed that the various versions described above also apply to the devices according to the invention that are to be described.

In the example of Fig. 3, the light emitted by transmitter 1 and shining through a small hole 5 in a movable body 4 is received by a light guide 3 and deflected to a photoreceiver 2, disposed on the same carrier 6 as transmitter 1.

Receiver 2 receives the light signal and transmits it to control apparatus 7 so as to control the sliding roof or a similar movable body, for instance via a motor. In principle, receiver 2 can be positioned in any desired plane and need not be positioned directly opposite the transmitter, as in the case of the traditional detecting/positioning devices. However, the transmitter and the receiver can advantageously be positioned in the same plane.

Further, an important advantage of this construction is that if more than one transmitter is used, together with several small holes and/or slots located side by side on bands so as to make a multibit code possible, only one receiver is required. The point is that, by activating the transmitters in turns and simultaneoulsy considering the output of the photoreceiver, it can be determined wich transmitter transmitted the light signal received at a given moment. This principle is known as multiplexing. Thus, a significant saving of cost can be realized. It is also possible to use, for instance, one transmitter and several receivers. The code can then be derived directly from the receiver.

By means of a device according to the invention, the position of a movable body can be determined at any time. In a sliding roof for a car, the device according to the invention can be connected to the control wich controls the motor that causes the roof to move. Thus, the control receives a signal and can determine the instantaneous position of the roof and 'act' accordingly.

Figs. 4 and 5 show a specific examplary embodiment, viz. a sliding roof construction of an automobile. The sliding roof in the example has three positions to be detected:
A - slantingly open
B - closed
C - horizontally open

These positions correspond to slot combinations A, B and C in Fig. 4.

Fig. 5 shows a flat plate connected to the sliding roof, provided with openings 20-23, indicating the position. Transmitters 1a, 1b and 1c are disposed on a printed circuit board 6, as is photoreceiver 2. Transmitter 1a can shine through opening 23; the light of transmitters 1b and 1c is blocked by plate 4. The position is now: horizontally open. The light of transmitter 1a is guided to photoreceiver 2 via light guide 3.

If plate 4 slides further to the right, a position can be reached wherein transmitters 1b and 1c are located opposite openings 21 and 22. The receiver then receives light from both transmitters. This can for instance take place in time shift (multiplex system). Upon further sliding of the plate, the long slot 21 and opening 20 are located simultaneously opposite transmitters 1a and 1b, which can also be detected again.

Alternatively, transmitters can be used which emit light at wavelengths specifically belonging to a particular transmitter. At the receiver end it can then be determined, on the basis of the spectrum of the light received, from which transmitters the light has originated. This does not require time multiplexing, but it does require suitable receivers and/or frequency filters.

It is also possible, with or without the use of a time multiplex system, to modulate the light, emitted by the transmitters, in a manner distinctive for each transmitter, in order that it can be determined at the receiver end, by means of suitable modulation detectors, from which transmitters the light originated.

The use of several openings and corresponding transmitters makes it possible to code and detect, by relatively simple means, a great number of positions of plate 4 and hence of a body connected thereto, such as a sliding roof. A similar effect can be obtained with a single transmitter and several receivers or with a plurality of transmitters and a plurality of receivers. The light guide or light guides can be located either at the transmitter end or at the receiver end.

Suitable light guides can be constructed in various manners, for instance by means of prisms and/or suitably ground glass elements, optionally provided with internally reflecting spots. Also, optical fibres, lenses and the like can be part of the light guide.

If so desired, the light guide may have one end mechanically fixed relative to the transmitter or receiver, the other end being provided with positioning means for the receiver or transmitter, respectively.

## Claims

1. A device for detecting the position of a movable body (12), comprising an element (4) which is part of the body or is 5 coupled to the body and moving with it, provided with at least one opening (10, 11) extending between opposite sides of the element and which moves along a predetermined path during movement of the body, and at least one light-radiating transmitter (1) and at least one light-sensitive receiver (2) mounted at the same side of a carrier (6), communicating with each other in particular positions of the elements (4) via a light path extending through the at least one opening, characterized in that the light-path extends in only one direction through the at least one opening (10,11) the light-path extends through at least one light-guide (3) having two ends, said light-guide being fixed relative to the carrier, wherein said light-guide extends outside the element (4) from the path of the opening to the at least one transmitter or receiver and forms a curved path and wherein one end of the light-guide (3) faces the transmitter or the receiver and wherein the other end of the light guide and the carrier are arranged on opposite sides of the element, respectively.

2. A device according to claim 1, characterized in that the at least one transmitter (1) and the at least one receiver (2) are substantially mounted in the same plane.

3. A device according to claim 1 or 2, characterized in that the openings (10,11; 20-23) are grouped in the element (4;12;15) which moves along, such that each position to be detected corresponds to a predetermined unique combination of openings (10,11;20-23) located in the light path.

4. A device according to any one of the preceding claims, characterized by at least two separate transmitters (1a,1b,1c) which are energized according to the time multiplex principle.

5. A device according to any one of claims 1-3, characterized by at least two separate transmitters (1a,1b,1c) each operating in a different wavelength range.

6. A device according to any one of claims 1-3,
characterized by at least two separate receivers, which are each modulated in a distinctive manner.

7. A device according to any one of the preceding claims, characterized in that the at least one transmitter (1) and the at least one receiver (2) are mounted on one and the same printed circuit board (6), together with an electronic control device (7) for a driving motor of the body (4;12;15).

8. A sliding roof control device comprising a device according to any one of the preceding claims.

## Patentansprüche

1. Vorrichtung zum Detektieren der Position eines bewegbaren Körpers (12), mit einem Element (4), das Teil des Körpers ist oder mit dem Körper verbunden ist und sich mit diesem bewegt, und das mindestens eine Öffnung (10,11) aufweist, die zwischen einander entgegengesetzten Seiten des Elements verläuft, und das sich während einer Bewegung des Körpers entlang eines vorbestimmten Weges bewegt, und mit mindestens einem lichtabstrahlenden Sender (1) und mindestens einem lichtempfindlichen Empfänger (2), die an der gleichen Seite eines Trägers (6) befestigt sind und in bestimmten Positionen des Elements (4) über einen durch die mindestens eine Öffnung verlaufenden Lichtweg miteinander kommunizieren,
dadurch gekennzeichnet, daß der Lichtweg in nur einer Richtung durch die mindestens eine Öffnung (10,11) verläuft und daß der Lichtweg durch mindestens einen Lichtleiter (3) verläuft, der zwei Enden hat, wobei der Lichtleiter relativ zu dem Träger fixiert ist, wobei der Lichtleiter von dem Weg der Öffnung zu dem mindestens einen Sender oder Empfänger aus dem Element (4) heraus verläuft und einen gekrümmten Weg bildet, und wobei ein Ende des Lichtleiters (3) dem Sender oder Empfänger zugewandt ist und wobei das andere Ende des Lichtleiters und der Träger auf an entgegengesetzten Seiten des Elements angeordnet sind.

2. Vorrichtung nach Anspruch 1, dadurch gekennzeichnet, daß der mindestens eine Sender (1) und der mindestens eine Empfänger (2) im wesentlichen in der gleichen Ebene angeordnet sind.

3. Vorrichtung nach Anspruch 1 oder 2, dadurch gekennzeichnet, daß die Öffnungen (10,11;20-23) in dem sich entlangbewegenden Element (4;12;15) derart gruppiert sind, daß jede Position, die detektiert werden soll, einer vorbestimmten einzigartigen Kombination von Öffnungen (10,11; 20-23) entspricht, welche in dem Lichtweg angeordnet sind.

4. Vorrichtung nach einem der vorhergehenden Ansprüche, gekennzeichnet durch mindestens zwei separate Sender (1a, 1b,1c), die gemäß dem Zeitmultiplex-Prinzip aktiviert werden.

5. Vorrichtung nach einem der Ansprüche 1-3, gekennzeichnet durch mindestens zwei separate Sender (1a,1b,1c), die jeweils in einem unterschiedlichen Wellenlängenbereich arbeiten.

6. Vorrichtung nach einem der Ansprüche 1-3, gekennzeichnet durch mindestens zwei separate Empfänger, die jeweils in unterschiedlicher Weise moduliert sind.

7. Vorrichtung nach einem der vorhergehenden Ansprüche, dadurch gekennzeichnet, daß der mindestens eine Sender (1) und der mindestens eine Empfänger (2) zusammen mit einer elektronischen Steuereinrichtung (7) für einen Antriebsmotor des Körpers (4;12;15) an ein und derselben gedruckten Schaltungsplatine (6) angeordnet sind.

8. Schiebedachsteuereinrichtung mit einer Vorrichtung nach einem der vorhergehenden Ansprüche.

## Revendications

1. Dispositif servant à détecter la position d'un corps mobile (12), comprenant un élément (4) qui fait partie du corps ou qui est couplé au corps et se déplace avec lui, comportant au moins une ouverture (10, 11) s'étendant entre les faces opposées de l'élément et qui se déplace suivant un trajet prédéterminé pendant le déplacement du corps, et au moins un émetteur (1) de rayonnement lumineux et au moins un récepteur (2) sensible à la lumière montés sur le même côté d'un support (6), communiquant l'un avec l'autre pour des positions particulières de l'élément (4) par un trajet de lumière qui passe par l'ouverture au nombre d'au moins une, caractérisé en ce que le trajet de lumière s'étend dans une seule direction à travers l'ouverture (10, 11) au nombre d'au moins une et le trajet de lumière traverse au moins un guide de lumière (3) comportant deux extrémités, ledit guide de lumière étant fixe par rapport au support, dans lequel ledit guide de lumière s'étend à l'extérieur de l'élément (4) depuis le trajet de l'ouverture vers l'émetteur ou le récepteur au nombre d'au moins un et forme un trajet courbe, et dans lequel une extrémité du guide de lumière (3) fait face à l'émetteur ou au récepteur et dans lequel l'autre extrémité du guide de lumière et le support sont respectivement disposés sur les côtés opposés de l'élément.

2. Dispositif selon la revendication 1, caractérisé en ce que l'émetteur (1) au nombre d'au moins un et le récepteur (2) au nombre d'au moins un sont installés sensiblement dans le même plan.

3. Dispositif selon la revendication 1 ou 2, caractérisé en ce que les ouvertures (10, 11 ; 20-23) sont groupées dans l'élément (4 ; 12 ; 15) qui se déplace avec elles, de sorte que chaque position à détecter correspond à une combinaison unique prédéterminée des ouvertures (10, 11 ; 20-23) situées dans le trajet de lumière.

4. Dispositif selon l'une quelconque des revendications précédentes, caractérisé par au moins deux éléments émetteurs séparés (1a, 1b, 1c) qui sont alimentés en énergie suivant le principe du multiplexage temporel.

5. Dispositif selon l'une quelconque des revendications 1 à 3, caractérisé par au moins deux éléments émetteurs séparés (1a, 1b, lc) dont chacun fonctionne dans une plage de longueurs d'onde différente.

6. Dispositif selon l'une quelconque des revendications 1 à 3, caractérisé par au moins deux récepteurs séparés qui sont modulés chacun d'une manière distincte.

7. Dispositif selon l'une quelconque des revendications précédentes, caractérisé en ce que l'émetteur (1) au nombre d'au moins un et le récepteur (2) au nombre d'au moins un sont montés sur une seule et même plaquette (6) de circuits imprimés, en même temps qu'un dispositif de commande électronique (7) destiné à un moteur d'entraînement du corps (4 ; 12 ; 15).

8. Dispositif de commande de toit ouvrant, comprenant un dispositif selon l'une quelconque des revendications précédentes.
